Europäisches Patentamt

European Patent Office

Office européen des brevets

(19)

(11) Veröffentlichungsnummer: **0 172 507**
**B1**

(12) **EUROPÄISCHE PATENTSCHRIFT**

(45) Veröffentlichungstag der Patentschrift: **11.04.90**

(51) Int. Cl.⁵: **G 01 N 19/04**

(21) Anmeldenummer: **85110024.8**

(22) Anmeldetag: **09.08.85**

(54) **Verfahren und Vorrichtung zum Bestimmen der Trennebenen von Mehrschichtanstrichen.**

(30) Priorität: **25.08.84 DE 3431390**

(43) Veröffentlichungstag der Anmeldung:
**26.02.86 Patentblatt 86/09**

(45) Bekanntmachung des Hinweises auf die
Patenterteilung:
**11.04.90 Patentblatt 90/15**

(84) Benannte Vertragsstaaten:
**FR GB IT SE**

(56) Entgegenhaltungen:
**DE-A-2 336 212**
**DE-B-2 428 687**
**GB-A- 794 467**

(73) Patentinhaber: **Bayerische Motoren Werke
Aktiengesellschaft
Patentabteilung AJ-30 Postfach 40 02 40
Petuelring 130
D-8000 München 40 (DE)**

(72) Erfinder: **Harlfinger, Rudolf
Hochrainerstrasse 29
D-8080 Fürstenfeldbruck (DE)**

(74) Vertreter: **Bücken, Helmut
Bayerische Motoren Werke Aktiengesellschaft
Postfach 40 02 40 Petuelring 130 - AJ-30
D-8000 München 40 (DE)**

**Beschreibung**

Die Erfindung bezieht sich auf ein Verfahren der im Oberbegriff des ersten Anspruchs angegebenen Art sowie auf eine Vorrichtung zur Durchführung des Verfahrens.

Gerade in der Automobilindustrie werden Mehrschichtanstriche zum Schutz der Karosserie aufgetragen. Diese Anstriche sollen sowohl bei korrosiver als auch bei mechanischer Beanspruchung beständig sein. Die Korrosionsbeständigkeit kann in Kurzzeitversuchen im Labor ermittelt werden. Die Beständigkeit bei mechanischer Beanspruchung läßt sich hingegen nicht so eindeutig bestimmen.

· Es ist zwar aus der Vornorm DIN 55995 ein Verfahren und eine Vorrichtung zur Prüfung der Seinschlagfestigkeit von Anstrichen mit Einzelschlaggeräten bekannt. Diese Vorrichtung verwendet jedoch als Prüfkörper eine Kugel. Mit einer derartigen Prüfmethode kann nur die Haftung der ersten Schicht auf dem Blech festgestellt werden. Nicht damit ermittelt werden kann die Haftung der einzelnen Schichten aufeinander.

Daneben ist das sog. Multischlagverfahren bekannt. Bei diesem Verfahren wird die Haftung der einzelnen Lackschichten aufeinander geprüft und zwar dadurch, daß der Prüfling nacheinander mit zweimal 500 g Stahlschrot in jeweils 10 Sekunden beschossen wird. Das Stahlschrot ist kantig ausgebildet. Die lose anhaftenden Lackteilchen werden mit einem Klebeband entfernt. Hierbei wird beurteilt die Menge und die Größe der abgeplatzten Beschichtung. Der Nachteil dieses Verfahrens liegt darin, daß die quantitative Verteilung des Stahlschrots und die Auftrefflage auf dem Prüfling willkürlich sind. Somit entstehen auf dem Prüfling Flächen, auf denen nur wenig Stahlschrot aufgetroffen ist und damit wenig Lack abgeplatzt ist, während es andererseits daneben auch Stellen geben kann, auf denen sehr viel Stahlschrot aufgetroffen ist, so daß dort wesentlich mehr Lack abgeplatzt ist. Dieses Verfahren eignet sich also nicht dazu, durch optische Kontrolle des Prüflings festzustellen, ob die Haftung der einzelnen Lackschichten von Probe zu Probe besser oder schlechter wird. Dieses ist aber wesentlich, um durch gezielte Veränderung der Prozeßparameter beim Lackieren zu erzielen, daß die Trennungsebene zwischen den einzelnen Schichten an die richtige Stelle verlegt wird. Denn nur in diesem Fall bringen z.B. farbige Füller Vorteile, da bei einem Haften des Füllers bei Steinschlagbeschädigung und Abplatzens des Decklackes die Steinschlagbeschädigung optisch gering bleibt.

Aufgabe der vorliegenden Erfindung ist es, ein Verfahren und eine Vorrichtung bereitzustellen, mit welchem die Haftungsfähigkeit der einzelnen Schichten bei Mehrschichten-Anstrichen Festgestellt werden kann und mit welchem auch eine qualitative Aussage bei Vergleich mehrerer Proben nebeneinander möglich ist.

Diese Aufgabe wird mit einem Verfahren gemäß Anspruch 1 gelöst. Eine zur Durchführung des Verfahrens geeignete Vorrichtung beschreibt Anspruch 2. Der Vorteil dieser Lösung besteht darin, daß aufgrund der Einwirkung eines einzigen Prüffkörpers auf den Prüfling qualitative und quantitative Aussagen (Trennebenen und Abplatzbreite) hinsichtlich der Haftungsfähigkeit der einzelnen Schichten möglich sind. Die erfindungsgemäß geforderte, extrem kurze Berührungszeit wird dadurch erzielt, daß die Masse des Hammers immer kleiner ist als die Masse des Prüfkörpers. Ein weiterer Vorteil des erfindungsgemäßen Verfahrens und seiner Vorrichtung besteht darin, daß die hiermit erzielten Ergebnisse mit denen nach dem sog. Multischlagverfahren ermittelten annähernd übereinstimmen, so daß die Korrelation zwischen Versuchs- und Praxisergebnissen übernommen werden können.

Eine Möglichkeit, wie der pneumatisch betriebene Hammer ausgebildet werden kann, beschreibt Anspruch 3. Der Prüfkörper wird dabei vorteilhafterweise nach der Ausbildung nach Anspruch 4 · angeordnet. Die Ausbildung nach Anspruch 5 bringt den Vorteil, daß der Prüpfkörper jeweils zu Beginn eines jeden Prüfverfahrens mit dem Prüfling in Kontakt steht.

Die Ausbildung nach den Ansprüchen 6 und 7 beschreibt für den Spitzenwinkel und die Masse des Prüfkörpers als vorteilhaft erkannte Werte.

Zur Steuerung des pneumatisch angetriebenen Hammers eignet sich ein 2/2-Wegeventil, welches mit einer Druckluftquelle verbunden ist, die einen Druck zwischen 4 und 8 bar liefert (Anspruch 8, 9). Man erkennt an den angegebenen Werten, daß es sich bei der Prüfvorrichtung um ein kleines, handliches Gerät handelt, was in jedem Versuchslabor eingesetzt werden kann. Daneben ist es auch möglich, es als mobiles Prüfgerät zu benutzen, so daß Prüflinge jeder Größe nach dem erfindungsgemäßen Prüfverfahren geprüft werden können. Auch lassen sich hiermit Prüfungen bei tiefen und hohen Temperaturen in temperierten Schränken problemlos durchführen.

Die Ausbildung nach den Ansprüchen 10 und 11 beschreibt ein einfaches Befestigungsverfahren für den Prüfling, bei dem sichergestellt ist, daß der Prüfling, üblicherweise ein Blechstück, mit seiner Prüfebene immer senkrecht zur Zylinderachse ausgerichtet ist und daß darüber hinaus keine Schwingungen des Prüflings auftreten.

Im folgenden wird die Erfindung anhand eines ausgewählten Beispieles näher erläutert. Es stellen dar:

Fig. 1 einen schematischen Querschnitt durch die erfindungsgemäße Vorrichtung;

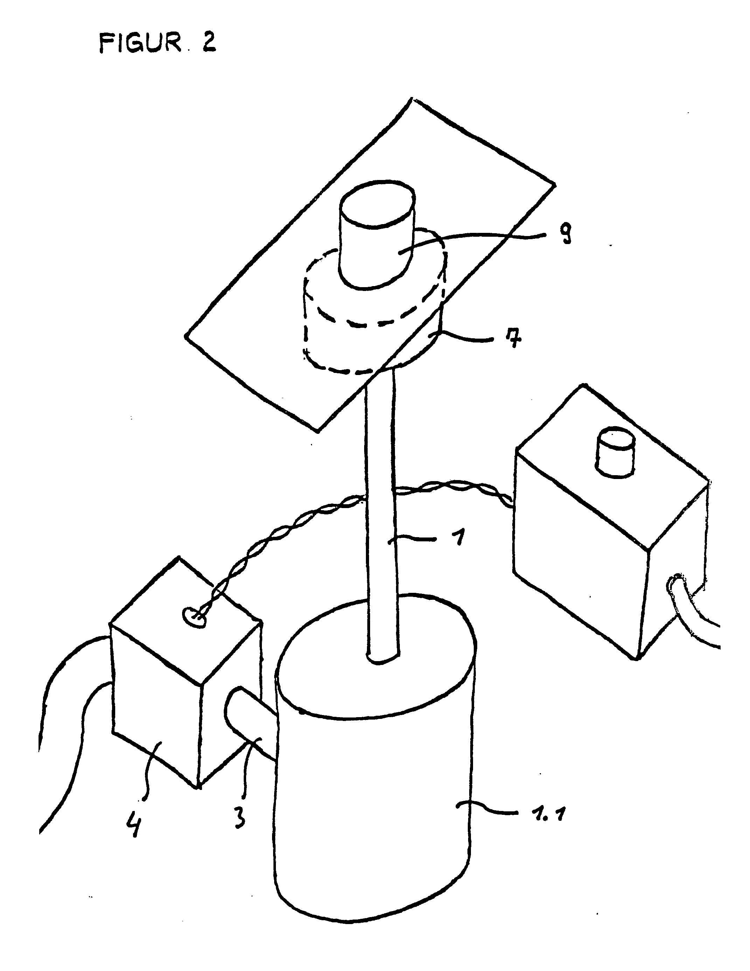

Fig. 2 eine perspektivische Ansicht der gesamten Prüfvorrichtung.

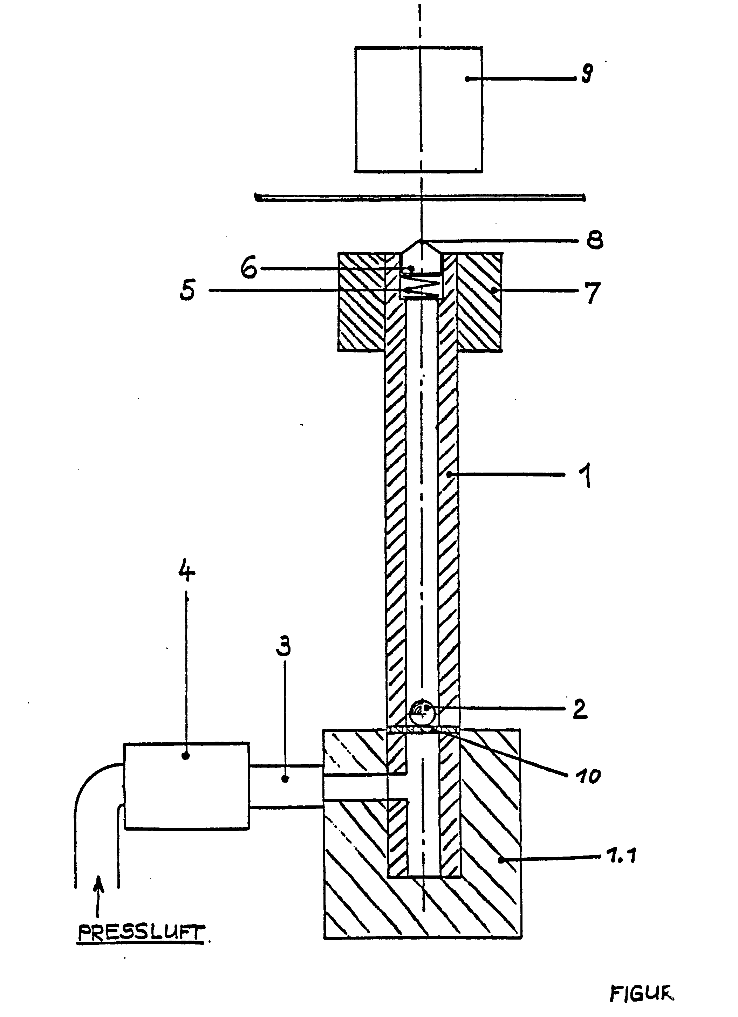

In Fig. 1 ist der Zylinder mit 1 bezeichnet, die darin bewegliche Kugel mit 2, die am unteren Ende des Zylinders mündende Pneumatikleitung mit 3 und das den Pneumatikdruck steuernde 2/2-Wegeventil mit 4. Der Zylinder ist mit einem Fuß 1.1 versehen, um ihn auf einem Labortisch hinzustellen. Das obere Ende des Zylinders 1 ist von einer Auflage 7 umgeben, aus der der Prüfkörper 6 mit seiner Schneide 8 herausragt. Der Prüfkörper 6 stützt sich über eine Feder 5 im oberen Ende des Zylinders 1 auf einem umlaufenden Absatz ab.

Im Ruhezustand befindet sich die Kugel 2 am unteren Ende des Zylinders 1, wo sie durch einen Ring Lochscheibe 10 gehalten wird. Zu Beginn des Prüfvorganges wird der zu prüfende Prüfling auf die Auflage 7 aufgelegt und durch ein Gewicht 9, z.B. einen Permanentmagneten belastet. Dadurch wird der Prüfkörper entgegen der Kraft der Feder 5 in die Auflage hinein verschoben. Gleichzeitig ist dadurch sichergestellt, daß die Schneide 8 mit dem Prüfling in Kontakt steht. Sodann wird das 2/2-Wegeventil durch einen Stromimpuls angesteuert. Dadurch wird ein kurzzeitiger Druckluftstoß in den Zylinder 1 geleiget, so daß die Kugel 2 beschleunigt gegen den Prüfkörper 6 stößt. Aufgrund der vorgegebenen Massenverhältnisse ist sichergestellt, daß die Berührungszeit zwischen der Kugel 2 und dem Prüfkörper 6 extrem kurz ist und daß auch nur ein einziger Stoß erfolgt. Der Impuls der Kugel 2 leitet über den Prüfkörper 6 und die Schneide 8 Stoßwellen in die Beschichtung des Prüfkörpers ein. An der Ebene mit der geringsten Haftung trennt sich der Mehrschichtanstrich. Die lose aufliegenden Lackteilchen können dann mit einem Klebeband entfernt werden. Anschließend wird die Breite der Ablösung gemessen und die Trennebene bzw. die prozentualen Anteile verschiedener Trennebenen werden optisch bestimmt.

Das Prüfgerät kann auch an kompletten Farhzeugen angesetzt werden. Hierbei ist es dann sinnvoll, um sicherzustellen, daß die Kugel auch jeweils nur einen einzelnen Impuls in den Prüfkörper einleitet, daß der Zylinder 1 gebogen ist, so daß die Kugel nach erfolgter Impulsabgabe wieder zurück in die Ausgangslage fällt.

## Patentansprüche

1. Verfahren zum Bestimmen der Trennebenen von Mehrschicht-Anstrichen, insbesondere auf Kraftfahrzeugblechen, bei dem ein einziger Prüfkörper (6) über ein pneumatisches System (3, 4) auf die Oberfläche eines Prüflings einwirkt, dadurch gekennzeichnet, daß der Prüfkörper eine Schneide (8) aufweist, mit der er mit dem Prüfling in Kontakt gebracht wird und anschließend von einem pneumatisch angetriebenen Hammer (2), dessen Masse kleiner als die Masse des Prüfkörpers (6) ist, einen einzigen, reproduzierbaren Impuls extrem kurzer Berührungszeit erhält und dadurch auf den Prüfling geschlagen wird.

2. Vorrichtung zum Bestimmen der Trennebenen von Mehrschicht-Anstrichen, insbesondere auf Kraftfahrzeugblechen, bestehend aus einem Prüfkörper (6), der über ein pneumatisches System (3, 4) impulsartig gegen einen Prüfling gestoßen wird, dadurch gekennzeichnet, daß der Prüfkörper (6) eine dem Prüfling zugewandte Schneide (8) aufweist, daß ein Hammer (2) vorgesehen ist, der vom pneumatischen System (3, 4) angetrieben wird und dessen Masse kleiner als die Masse des Prüfkörpers (6) ist, so daß der Prüfkörper (6) vom Hammer (2) einen einzigen, reproduzierbaren Impuls extrem kurzer Berührungszeit erhält und dadurch auf den Prüfling geschlagen wird.

3. Vorrichtung nach Anspruch 2, dadurch gekennzeichnet, daß der Hammer eine Kugel (2) ist, die in einem Zylinder (1) geführt ist.

4. Vorrichtung nach Anspruch 3, dadurch gekennzeichnet, daß das eine Ende des Zylinders (1) von dem verschiebbar angeordneten Prüfkörper (6) verschlossen ist und daß an dem anderen Ende eine Pneumatikzuleitung (3) angeschlossen ist.

5. Vorrichtung nach Anspruch 4, dadurch gekennzeichnet, daß der Prüfkörper (6) in dem Zylinder (1) über eine Feder (5) gehalten ist.

6. Vorrichtung nach einem der vorangegangenen Ansprüche, dadurch gekennzeichnet, daß die Schneide (8) einen Spitzenwinkel von 60° bis 150° aufweist.

7. Vorrichtung nach einem der vorangegangenen Ansprüche, dadurch gekennzeichnet, daß die Masse des Prüköpers (16) ca. 2 g beträgt.

8. Vorrichtung nach einem der Ansprüche 2 bis 4, dadurch gekennzeichnet, daß die Pneumatik zu leitung (3) mit einem elektrisch ansteuerbaren 2/2-Wegeventil (4) verbunden ist.

9. Vorrichtung nach einem der Ansprüche 2 bis 4, 8, dadurch gekennzeichnet, daß der Druck in der Pneumatik zu leitung (3) zum Beschleunigen des Hammers (2) zwischen 4 und 8 bar beträgt.

10. Vorrichtung nach einem der vorangegangenen Ansprüche, dadurch gekennzeichnet, daß der Prüfling von einer in der axialen Verlängerung des Zylinders (1) angeordneten Halteeinrichtung (9) gegen den Prüfkörper (8) gedrückt wird.

11. Vorrichtung nach Anspruch 10, dadurch gekennzeichnet, daß die Halteeinrichtung ein kreiszylinderförmiger Dauermagnet (9) ist, dessen Grundkreisdurchmesser größer als die Schneidenlänge ist.

## Revendications

1. Procédé de détermination des plans de séparation de revêtements à plusieurs couches, en particulier sur des tôles de véhicules automobiles, selon lequel un seul corps d'épreuve (6) agit sur la surface d'une éprouvette grâce à un système pneumatique (3, 4), caractérisé en ce que le corps en expérimentation comporte une lame (8) grâce à laquelle il est mis en contact avec l'éprouvette et, ensuite, par un marteau entraîné pneumatiquement, dont la masse est plus petite que la masse du corps d'épreuve (6), on obtient une seule impulsion reproductible avec un temps de contact extrêmement court, et que, de cette façon, il soit projeté sur l'éprouvette.

2. Dispositif pour la détermination des plans de séparation de revêtements à plusieurs couches, en particulier sur des tôles de véhicules automobiles, se composant d'un corps d'épreuve (6) qui est projeté par impulsion grâce à un système pneumatique (3, 4) contre une éprouvette, caractérisé en ce que le corps d'épreuve (6) comporte une lame faisant face à l'éprouvette, en ce qu'il est prévu un marteau (2) qui est entraîné pneumatiquement, et dont la masse est plus petite que la masse du corps d'épreuve (6) et en ce que le corps d'épreuve (6) provoque par l'intermédiaire du marteau (2), une impulsion unique, reproductible de durée extrêmement courte et, de cette façon, est appliquée à l'éprouvette.

3. Dispositif selon la revendication 2, caractérisé en ce que le marteau est une bille (2) qui est guidée dans un cylindre (1).

4. Dispositif selon la revendication 3, caractérisé en ce qu'une extrémité du cylindre (1) est fermée par le corps d'épreuve (6) placé de façon amovible, et que l'autre extrémité est reliée à une canalisation d'air comprimé.

5. Dispositif selon la revendication 4, caractérisé en ce que le corps d'épreuve (6) est maintenu dans le cylindre (1) par un ressort (5).

6. Dispositif selon l'une des revendications précédentes, caractérisé en ce que la lame (8) présente un angle au sommet allant de 60 à 150°.

7. Dispositif selon l'une des revendications précédentes, caractérisé en ce que la masse du corps d'épreuve (6) atteint environ 2 g.

8. Dispositif selon l'une des revendications 2 à 4, caractérisé en ce que la canalisation d'air comprimé (3) est reliée à un distributeur deux fois deux voies actionnable électriquement.

9. Dispositif selon l'une des revendications 2 à 4, 8, caractérisé en ce que la pression dans la canalisation d'air comprimé (3) pour l'accélération du marteau (2) va de 4 à 8 bars.

10. Dispositif selon l'une des revendications précédentes, caractérisé en de que l'éprouvette est appuyée contre le corps d'épreuve (6) par un dispositif de support placé dans le prolongement axial du cylindre (1).

11. Dispositif selon la revendication 10, caractérisé en ce que le dispositif de support est un aimant permanent (9) cylindrique circulaire dont le diamètre du cercle de base est plus grand que la longueur de la lame.

**Claims**

1. A method for determining the planes of separation of multi-layer paint coats, especially on motor vehicle metal plates, in which a single testing body (6) acts through a pneumatic system (3, 4) upon the surface of a tested piece, characterised in that the testing body possesses a knife edge (8) with which it is brought into contact with the tested piece and then receives, from a pneumatically-driven hammer (2), the mass of which is less than the mass of the testing body (6), a single, reproducible impulse of extremely short contact time, and thus is struck against the tested piece.

2. An apparatus for determining the planes of separation of multi-layer paint coats, especially on motor vehicle metal plates, comprising a testing body (6) which is knocked in impulse manner through a pneumatic system (3, 4) against a tested piece, characterised in that the testing body (6) comprises a knife edge (8) facing the tested piece, in that a hammer (2) is provided which is driven by the pneumatic system (3, 4) and the mass of which is less than the mass of the testing body (6) so that the testing body (6) receives from the hammer (2) a single, reproducible impulse of extremely short contact time and thus is struck against the tested piece.

3. An apparatus according to Claim 2, characterised in that the hammer is a ball (2) which is guided in a cylinder (1).

4. An apparatus according to claim 3, characterised in that the one end of the cylinder (1) is closed by the displaceably-arranged testing body (6) and in that a pneumatic supply conduit (3) is connected to the other end.

5. An apparatus according to Claim 4, characterised in that the testing body (6) is held in the cylinder (1) by means of a spring (5).

6. An apparatus according to any one of the preceding Claims, characterised in that the knife edge (8) has a tip angle of 60° to 150°.

7. An apparatus according to any one of the preceding Claims, characterised in that the mass of the testing body (6) amounts to about 2 g.

8. An apparatus according to any one of Claims 2 to 4, characterised in that the pneumatic supply conduit (3) is connected with an electrically-controllable 2/2 directional control valve (4).

9. An apparatus according to any one of Claims 2 to 4 and 8, characterised in that the pressure in the pneumatic supply conduit (3) for accelerating the hammer (2) amounts to between 4 and 8 bars.

10. An apparatus according to any one of the preceding Claims, characterised in that the tested piece is pressed against the testing body (8) by a retaining device (9) arranged in the axial extension of the cylinder (1).

11. An apparatus according to Claim 10, characterised in that the retaining device is a permanent magnet (9) of circular cylinder form, the base circle diameter of which is greater than the knife edge length.

PRESSLUFT

FIGUR

FIGUR. 2